# EUROPEAN PATENT APPLICATION

(11) **EP 1 515 476 A1**
(43) Date of publication of application: **16.03.2005**
(21) Application number: 03760864.3
(22) Date of filing: 26.05.2003
(51) Int. Cl.: H04L 9/32, G06F 17/60

(54) **DATA COMMUNICATION SYSTEM, INFORMATION PROCESSING DEVICE AND METHOD, RECORDING MEDIUM, AND PROGRAM**

(30) Priority: 20.06.2002 JP 2002180126
(71) Applicant: Sony Corporation, Tokyo 141-0001 (JP)
(72) Inventor: NAGAO, Yutaka, SONY CORPORATION, Tokyo 141-0001 (JP)
(74) Representative: Nicholls, Michael John
(86) International application number: PCT/JP2003/006506
(87) International publication number: WO 2004/002059

(57) **Abstract**

The present invention relates to a data communication system that prevents a timing at which digital content data is made usable or a timing at which a billing process is performed from being known by a malicious client, to an information processing device and method therefor, to a recording medium therefor, and to a program therefor. A client terminal encrypts a signal TAG1 and a random number NON1 in a linked manner and transmits these to a content sales server. The content sales server decrypts the received encrypted data sequence and sends back the random number NON1 contained in the decrypted result to the client terminal. The client terminal confirms that the random number NON1 is contained in this response. Then, after this series of processes is repeated a random number of times, the digital content is set to the effective state. The present invention can be applied to services which sell digital content via the Internet.

## Description

### Technical Field

The present invention relates to a data communication system, an information processing device and method, a recording medium, and a program. For example, the present invention relates to a data communication system suitable for use in a case where content data or right data indispensable for using the content data is communicated via a network, to an information processing device and method therefor, to a recording medium therefor, and to a program therefor.

### Background Art

Conventionally available services exist in which digital content such as music, video, and computer programs are sold via a network typified by the Internet.

In a series of processes performed by a conventional digital content sales service, encrypted digital content is downloaded via the Internet from a server on the seller side to a terminal device on the client (purchaser) side (hereinafter referred to as a "client terminal"), and thereafter, encrypted data is decrypted in the client terminal in such a manner as to correspond to information from the server, so that the digital content is made usable. Thereafter, billing of a purchase price for the client is set in the server.

Alternatively, after encrypted digital content is supplied by some method, right data indispensable for using the encrypted digital content is transmitted to the client terminal from the server via the Internet, and thereafter, billing for the client is set in the server.

In such a conventional digital content sales service, there is a problem of the possibility that the timing at which digital content data is made usable, the timing of the billing in the server, and others are analyzed by a malicious user, and after the digital content is made usable at the client terminal and before billing is set, for example, when the connection between the server and the client terminal is forcedly released, the digital content is intentionally obtained without the purchase price being paid.

### Disclosure of the Invention

The present invention has been made in view of such circumstances. An object of the present invention is to prevent the timing at which digital content data is made. usable, the timing at which billing is set, and others from being known from a malicious client by communicating dummy data at random between the server and the client terminal.

In the first data communication system of the present invention, after the client terminal repeats a process for transmitting a first signal and a first random number, which are encrypted, to the server via the network for a random number of times, the client terminal sets stored content data from an ineffective state to an effective state, and transmits a second signal and a second random number, which are encrypted, to the server via the network, and the server decrypts a data sequence from the client terminal via the network, sends back the first random number to the client terminal via the network when the first signal is contained in the decrypted result, and performs a billing process for a user of the client terminal when the second signal is contained in the decrypted result, and thereafter, sends back the second random number to the client terminal via the network.

The first information processing device of the present invention includes: random-number generation means for generating a random number; generation means for generating first and second signals; encryption means for encrypting a data sequence; transmission means for transmitting the data sequence encrypted by the encryption means to the server via the network; setting means for setting stored content data from an ineffective state to an effective state; and control means for controlling the random-number generation means, the generation means, the encryption means, the transmission means, and the setting means, wherein, after the control means repeats a process for transmitting the first signal and the first random number, which are encrypted, to the server via the network for a random number of times, the control means sets the content data from the ineffective state to the effective state, and transmits the second signal and the second random number, which are encrypted, to the server via the network.

The first information processing method of the present invention includes: a random-number generation step of generating a random number; a generation step of generating first and second signals; an encryption step of encrypting a data sequence; a transmission step of transmitting the data sequence encrypted in the process of the encryption step to the server via the network; a setting step of setting stored content data from an ineffective state to an effective state; and a control step of controlling the random-number generation step, the generation step, the encryption step, the transmission step, and the setting step, wherein, in the control step, after a process for transmitting the first signal and the first random number, which are encrypted, to the server via the network is repeated a random number of times, the content data is set from the ineffective state to the effective state, and the second signal and the second random number, which are encrypted, are transmitted to the server via the network.

The program of the first recording medium of the present invention includes: a random-number generation step of generating a random number; a generation step of generating first and second signals; an encryption step of encrypting a data sequence; a transmission step of transmitting the data sequence encrypted in the process of the encryption step to the server via the network; a setting step of setting stored content data from an ineffective state to an effective state; and a control step of controlling the random-number generation step, the generation step, the encryption step, the transmission step, and the setting step, wherein, in the control step, after a process for transmitting the first signal and the first random number, which are encrypted, to the server via the network is repeated a random number of times, the content data is set from the ineffective state to the effective state, and the second signal and the second random number, which are encrypted, are transmitted to the server via the network.

The first program of the present invention includes: a random-number generation step of generating a random number; a generation step of generating first and second signals; an encryption step of encrypting a data sequence; a transmission step of transmitting the data sequence encrypted in the process of the encryption step to the server via the network; a setting step of setting stored content data from an ineffective state to an effective state; and a control step of controlling the random-number generation step, the generation step, the encryption step, the transmission step, and the setting step, wherein, in the control step, after a process for transmitting the first signal and the first random number, which are encrypted, to the server via the network is repeated a random number of times, the content data is set from the ineffective state to the effective state, and the second signal and the second random number, which are encrypted, are transmitted to the server via the network.

The second information processing device of the present invention includes: decryption means for decrypting a data sequence received from the client terminal via the network; sending-back means for sending back, to the client terminal via the network, a data sequence contained in the decrypted result of the decryption means; and billing means for performing a billing process for a user of the client terminal in such a manner as to correspond to the decrypted result of the decryption means.

The second information processing method of the present invention includes: a decryption step of decrypting a data sequence received from the client terminal via the network; a sending-back step of sending back, to the client terminal via the network, a data sequence contained in the decrypted result in the process of the decryption step; and a billing step of performing a billing process for a user of the client terminal in such a manner as to correspond to the decrypted result in the process of the decryption step.

The program of the second recording medium of the present invention includes: a decryption step of decrypting a data sequence received from the client terminal via the network; a sending-back step of sending back, to the client terminal via the network, a data sequence contained in the decrypted result in the process of the decryption step; and a billing step of performing a billing process for a user of the client terminal in such a manner as to correspond to the decrypted result in the process of the decryption step.

The second program of the present invention includes: a decryption step of decrypting a data sequence received from the client terminal via the network; a sending-back step of sending back, to the client terminal via the network, a data sequence contained in the decrypted result in the process of the decryption step; and a billing step of performing a billing process for a user of the client terminal in such a manner as to correspond to the decrypted result in the process of the decryption step.

In the second data communication system of the present invention, the client terminal decrypts and stores a data sequence from the server via the network, encrypts the decrypted result together with a request for transmitting right data corresponding to stored content data, and transmits it to the server via the network, and after the server repeats a process for transmitting dummy data, which is encrypted, to the client terminal via the network in such a manner as to correspond to the transmission request from the client terminal via the network and for confirming that the dummy data is contained in the.response from the client terminal for a random number of times, the server transmits the right data, which is encrypted, corresponding to content data stored in the client terminal to the client terminal via the network, and performs a billing process for a user of the client terminal after confirming that the right data is contained in the response from the client terminal.

The third information processing device of the present invention includes: storage means for storing content data; generation means for generating a request for transmitting right data corresponding to the content data; decryption means for decrypting and storing a data sequence from the server via the network; and transmission means for transmitting the decrypted result of the decryption means to the server via the network, the decoded result being encrypted in such a manner as to be contained in the transmission request.

The third information processing method of the present invention includes: a storage step of storing content data; a generation step of generating a request for transmitting right data corresponding to the content data; a decryption step of decrypting and storing a data sequence from the server via the network; and a transmission step of transmitting the decrypted result in the process of the decryption step to the server via the network, the decoded result being encrypted in such a manner as to be contained in the transmission request.

The program of the third recording medium of the present invention includes: a storage step of storing content data; a generation step of generating a request for transmitting right data corresponding to the content data; a decryption step of decrypting and storing a data sequence from the server via the network; and a transmission step of transmitting the decrypted result in the process of the decryption step to the server via the network, the decoded result being encrypted in such a manner as to be contained in the transmission request.

The program of the third recording medium of the present invention includes: a storage step of storing content data; a generation step of generating a request for transmitting right data corresponding to the content data; a decryption step of decrypting and storing a data sequence from the server via the network; and a transmission step of transmitting the decrypted result in the process of the decryption step to the server via the network, the decoded result being encrypted in such a manner as to be contained in the transmission request.

The fourth information processing device of the present invention includes: random-number generation means for generating a random number; encryption means for encrypting a data sequence; transmission means for transmitting the data sequence encrypted by the encryption means to the client terminal via the network; decryption means for decrypting a data sequence received from the client terminal via the network; billing means for performing a billing process for a user of the client terminal in such a manner as to correspond to the decrypted result of the decryption means; and control means for controlling the random-number generation means, the generation means, the encryption means, the transmission means, the decryption means, and the billing means, wherein, after the control means repeats a process for transmitting dummy data, which is encrypted, formed of a random number to the server via the network and for confirming that the dummy data is contained in the response from the client terminal for a random number of times, the right data, which is encrypted, is transmitted to the client terminal via the network, and after confirming that the right data is contained in the response from the client terminal, a billing process for a user of the client terminal is performed.

The fourth information processing method of the present. invention includes: a random-number generation step of generating a random number; an encryption step of encrypting a data sequence; a transmission step of transmitting the data sequence encrypted in the process of the encryption step to the client terminal via the network; a decryption step of decrypting a data sequence received from the client terminal via the network; a billing step of performing a billing process for a user of the client terminal in such a manner as to correspond to the decrypted result in the process of the decryption step; and a control step of controlling the random-number generation step, the encryption step, the transmission step, the decryption step, and the billing step, wherein, in the control step, after a process for transmitting dummy data, which is encrypted, formed of a random number to the client terminal via the network and for confirming that the dummy data is contained in the response from the client terminal is repeated a random number of times, the right data, which is encrypted, is transmitted to the client terminal via the network, and after confirming that the dummy data is contained in the response from the client terminal, a billing process for a user of the client terminal is performed.

The program of the fourth recording medium of the present invention includes: a random-number generation step of generating a random number; an encryption step of encrypting a data sequence; a transmission step of transmitting the data sequence encrypted in the process of the encryption step to the client terminal via the network; a decryption step of decrypting a data sequence received from the client terminal via the network; a billing step of performing a billing process for a user of the client terminal in such a manner as to correspond to the decrypted result in the process of the decryption step; and a control step of controlling the random-number generation step, the encryption step, the transmission step, the decryption step, and the billing step, wherein, in the control step, after a process for transmitting dummy data, which is encrypted, formed of a random number to the server via the network and for confirming that the dummy data is contained in the response from the client terminal is repeated a random number of times, the right data, which is encrypted, is transmitted to the client terminal via the network, and after confirming that the right data is contained in the response from the client terminal, a billing process for a user of the client terminal is performed.

The fourth program of the present invention includes: a random-number generation step of generating a random number; an encryption step of encrypting a data sequence; a transmission step of transmitting the data sequence encrypted in the process of the encryption step to the client terminal via the network; a decryption step of decrypting a data sequence received from the client terminal via the network; a billing step of performing a billing process for a user of the client terminal in such a manner as to correspond to the decrypted result in the process of the decryption step; and a control step of controlling the random-number generation step, the encryption step, the transmission step, the decryption step, and the billing step, wherein, in the control step, after a process for transmitting dummy data, which is encrypted, formed of a random number to the server via the network and for confirming that the dummy data is contained in the response from the client terminal is repeated a random number of times, the right data, which is encrypted, is transmitted to the client terminal via the network, and after confirming that the right data is contained in the response from the client terminal, a billing process for a user of the client terminal is performed.

In the first data communication system of the present invention, after the client terminal repeats a process of transmitting a first signal and a first random number, which are encrypted, to the server via the network for a random number of times, the client terminal sets stored content data from the ineffective state to the effective state, and transmits a second signal and a second random number, which are encrypted, to the server via the network. The server decrypts a data sequence from the client terminal via the network, sends back the first random number to the client terminal via the network when the first signal is contained in the decrypted result, and performs a billing process for a user of the client terminal when the second signal is contained in the decrypted result, and thereafter, sends back the second random number to the client terminal via the network.

In the first information processing device and method, and the first program of the present invention, after a process for transmitting the first signal and the first random number, which are encrypted, to the server via the network is repeated a random number of times, content data is set from the ineffective state to the effective state, and the second signal and the second random number, which are encrypted, are transmitted to the server via the network.

In the second information processing device and method, and the second program of the present invention, a data sequence is received from the client terminal via the network and is decrypted. The data sequence contained in the decrypted result of the decryption means is sent back to the client terminal via the network. Then, a billing process for a user of the client terminal is performed in such a manner as to correspond to the decrypted result.

In the second data communication system of the present invention, the client terminal decrypts and stores a data sequence from the server via the network, encrypts the decrypted result together with a request for transmitting right data corresponding to stored content data, and transmits the encrypted decoded result to the server via the network. After the server repeats a process for transmitting the dummy data, which is encrypted, to the client terminal via the network in response to the transmission request from the client terminal via the network and for confirming that the dummy data is contained in the response from the client terminal for a random number of times, the server transmits the right data, which is encrypted, corresponding to content data stored in the client terminal to the client terminal via the network, and performs a billing process for a user of the client terminal after confirming that the right data is contained in the response from the client terminal.

In the third information processing device and method, and the third program of the present invention, content data is stored, and a request for transmitting right data corresponding to the content data is generated. Furthermore, a data sequence from the server via the network is decrypted and stored. The decrypted result is encrypted in such a manner as to be contained in the transmission request, and the encrypted decoded result is transmitted to the server via the network.

In the fourth information processing device, after a process for transmitting the dummy data, which is encrypted, formed of a random number to the client terminal via the network and for confirming that the dummy data is contained in the response from the client terminal is repeated a random number of times, the right data, which is encrypted, is transmitted to the client terminal via the network, and after confirming that the right data is contained in the response from the client terminal, a billing process for a user of the client terminal is performed.

### Brief Description of the Drawings

Fig. 1 is a block diagram showing an example of the configuration of a digital content sales system to which the present invention is applied.
Fig. 2 is a block diagram showing an example of the configuration of a content sales server 1.
Fig. 3 shows a first example of the configuration of the functional blocks which form each of the content sales server 1 and a client terminal 3.
Fig. 4 is a flowchart illustrating a first mutual operation by the first example of the configuration of Fig. 3.
Fig. 5 shows a second example of the configuration of the functional blocks which form each of the content sales server 1 and the client terminal 3.
Fig. 6 is a flowchart illustrating a second mutual operation by the second example of the configuration of Fig. 5.

### Best Mode for Carrying Out the Invention

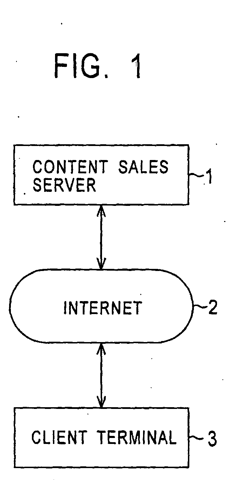

Fig. 1 shows an example of the configuration of a digital content sales system to which the present invention is applied. This digital content sales system is managed by a seller of digital content, and includes a content sales server 1 which sells digital content via the Internet 2 and a client terminal 3, operated by a client who purchases the digital content, which is connected to the content sales server 1 via the Internet 2 and which obtains the digital content.

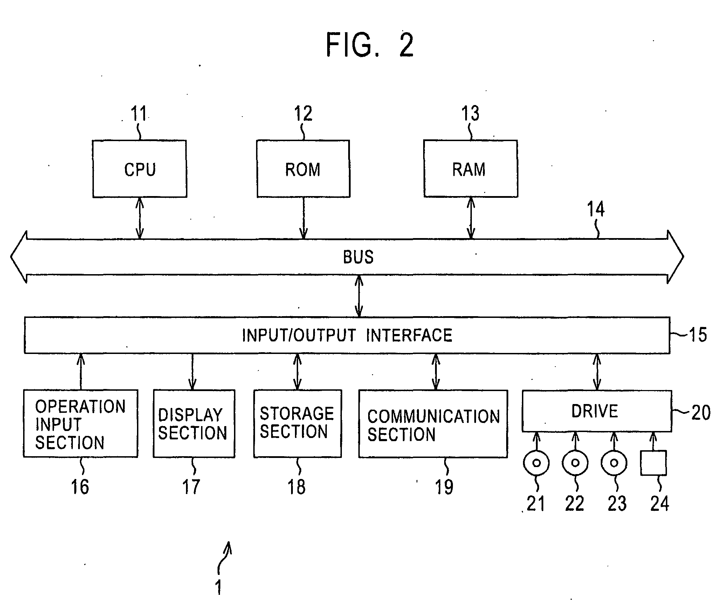

Fig. 2 shows an example of the configuration of the content sales server 1. This content sales server 1 incorporates a CPU (Central Processing Unit) 11. An input/output interface 15 is connected to the CPU 11 via a bus 14. A ROM (Read Only Memory) 12 and a RAM (Random Access Memory) 13 are connected to the bus 14.

Connected to the input/output interface 15 are an operation input section 16 including input/output devices such as a keyboard, a mouse, etc., from which an operator inputs various kinds of operations; a display section 17 including a CRT (Cathode Ray Tube) or an LCD (Liquid-Crystal Display) for displaying the operation screen, etc.; a storage section 18, including a hard disk drive, etc., for storing various kinds of data, such as programs and digital content; a communication section 19 for performing a communication process with the client terminal 3 via the Internet 2; and a drive 20 for reading and writing data from and to recording media such as a magnetic disk 21 to semiconductor memory 24.

The CPU 11 realizes a series of processes (to be described later) by executing a program stored in the ROM 12 or a program which is read from the magnetic disk 21 to semiconductor memory 24 and is stored in the storage section 18, and which is loaded into the RAM 13 from the storage section 18. In the RAM 13, data required for the CPU 11 to execute various kinds of processes is stored as appropriate.

The client terminal 3 is configured similarly to the content server 1 shown in Fig. 2, and accordingly, the illustration and the description thereof are omitted.

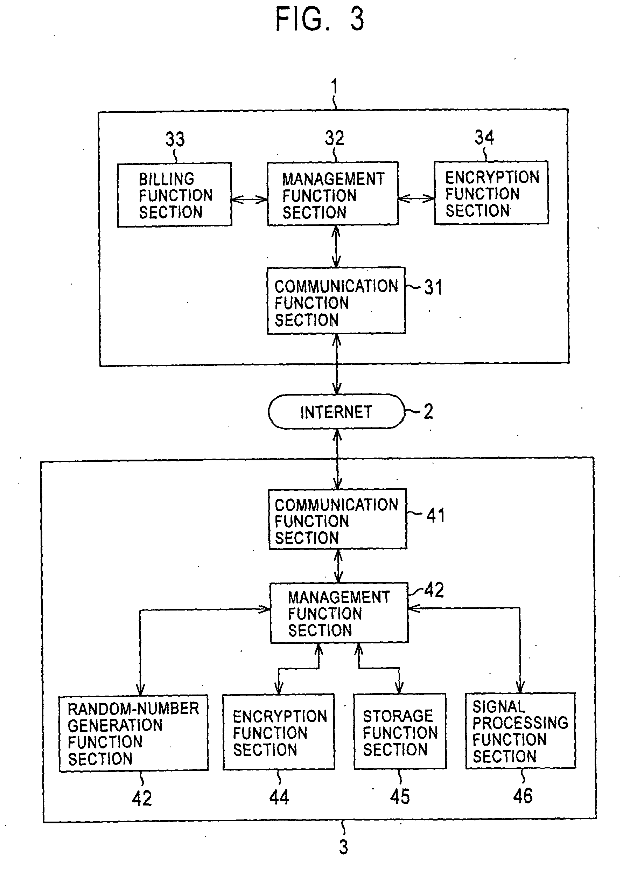

Fig. 3 shows a first example of the configuration of the functional blocks which form each of the content sales server 1 and the client terminal 3.

A communication function section 31 of the content sales server 1 communicates various kinds of data with the client terminal 3 via the Internet 2 under the control of a management function section 32. The management function section 32 performs processes corresponding to various kinds of data, which is input via the communication function section 31, from the client terminal 3. A billing function section 33 performs a billing process for the client under the control of the management function section 32. An encryption function section 34 encrypts and decrypts various kinds of data by using a secret key shared with the client terminal 3 under the control of the management function section 32.

A communication function section 41 of the client terminal 3 communicates various kinds of data with the content sales server 1 via the Internet 2 under the control of a management function section 42. The management function section 42 performs processes corresponding to various kinds of data, which is input via the communication function section 41, from the content sales server 1. A random-number generation function section 43 generates a random number under the control of the management function section 42. An encryption function section 44 encrypts and decrypts various kinds of data by using a secret key shared with the content sales server 1 under the control of the management function section 42. A storage function section 45 stores various kinds of data under the control of the management function section 42. A signal processing function section 46 generates a predetermined signal under the control of the management function section 32.

The encryption function section 34 which forms the content sales server 1, and the sections from the management function section 42 to the storage function section 45 which form the client terminal 3 are designed so as not to output information (for example, an encryption key, a generated random number, a stored value, etc.) held by themselves in response to any operation from a malicious client.

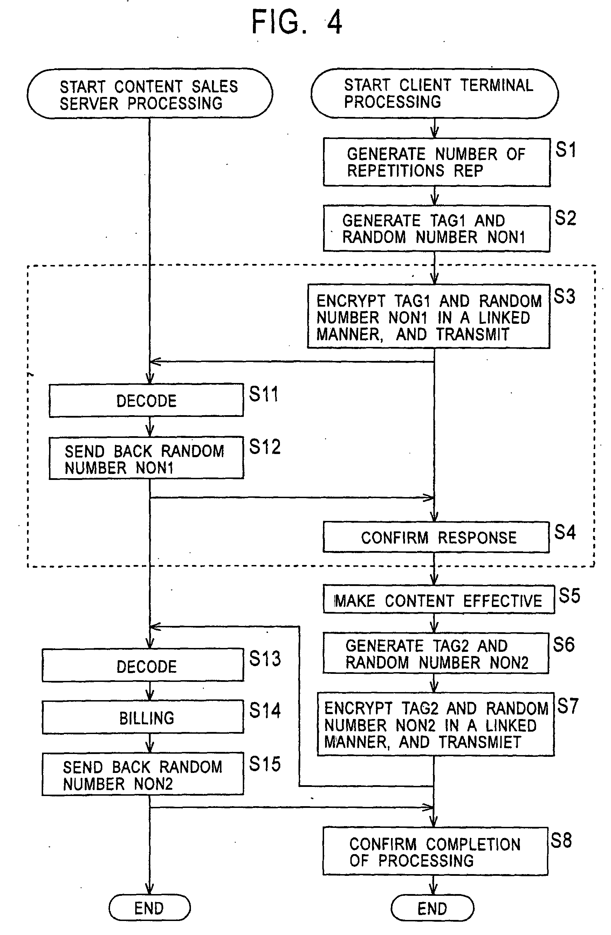

A description will now be given, with reference to the flowchart in Fig. 4, of a mutual operation by the first example of the configuration of the content sales server 1 and the client terminal 3 (hereinafter referred to as a "first mutual operation").

The assumption in which this first mutual operation is performed is that digital content, which is downloaded from the content sales server 1 via the Internet 2 and which is not in a usable state, has already been stored in the storage function section 45 of the client terminal 3. Furthermore, it is assumed that the encryption function section 34 of the content sales server 1 and the encryption function section 44 of the client terminal 3 have a common secret key (used for encryption and decryption). However, instead of having a common secret key, both of them may be assigned with a public key, and AKE may be performed to share a secret key. Furthermore, it is assumed that information regarding the billing for the client (for example, the credit card number, etc.) has already been supplied to the billing function section 33 of the content sales server 1.

In step S1, in order to determine the number of repetitions REP, the management function section 42 of the client terminal 3 controls the random-number generation function section 43 so as to generate a random number which is a positive integer. In step S2, the management function section 42 causes the random-number generation function section 43 to generate a random number NON1 and causes the storage function section 45 to store it. Furthermore, the management function section 42 causes the signal processing function section 46 to generate a signal TAG1. Here, it is assumed that the generated signal TAG1 can be recognized by the management function section 32 of the content sales server 1.

In step S3, the management function section 42 controls the encryption function section 44 so as to encrypt the signal TAG1 and the random number NON1 in a linked manner (for example, by adding both), and causes the communication function section 41 to transmit an encrypted data sequence to the content sales server 1 via the Internet 2.

In response to this, in step S11, the communication function section 31 of the content sales server 1 receives the encrypted data sequence and outputs it to the management function section 32. The management function section 32 causes the encryption function section 34 to decrypt the encrypted data sequence. When the signal TAG1 is contained in the decrypted result, the management function section 32 does not perform a billing process, and in step S12, the management function section 32 controls the communication function section 31 so as to send back the random number NON1 contained in the decrypted result.

In response to this, in step S4, the communication function section 41 of the client terminal 3 receives the response from the content sales server 1 and outputs it to the management function section 42. The management function section 42 confirms whether the random number NON1 contained in this response is the same as that stored in the storage function section 45. Only when it can be confirmed that these are the same, the management function section 42 continues with the subsequent processes. Conversely, when it cannot be confirmed that these are the same, the management function section 42 stops the subsequent processes because there is a possibility that some kind of malicious operation has been performed by a malicious client or the like.

The management function section 42 repeats the processes of the above-described steps S3 and S4 (the processes surrounded by the broken line in the figure) for a number of repetitions REP, and thereafter, in step S5, the management function section 42 sets the digital content, stored in the storage function section 45, which is not in a usable state, to a usable state. That is, the digital content stored in the storage function section 45 is made effective. More specifically, for example, the encryption performed on the digital content is decrypted, the number-of-use limit, which has been set to 0, is initialized to a predetermined value, or a predetermined flag is set.

In step S6, the management function section 42 of the client terminal 3 causes the random-number generation function section 43 to generate a random number NON2 and causes the storage function section 45 to store it. Furthermore, the management function section 42 causes the signal processing function section 46 to generate a signal TAG2. Here, it is assumed that the generated signal TAG2 can be recognized by the management function section 32 of the content sales server 1. That is, it is necessary at least for the management function section 32 to distinguish between the signals TAG1 and TAG2.

In step S7, the management function section 42 controls the encryption function section 44 so as to encrypt the signal TAG2 and the random number NON2 in a linked manner (for example, by adding both), and causes the communication function section 41 to transmit an encrypted data sequence to the content sales server 1 via the Internet 2.

In response to this, in step S13, the communication function section 31 of the content sales server 1 receives the encrypted data sequence and outputs it to the management function section 32. The management function section 32 causes the encryption function section 34 to decrypt the encrypted data sequence. When the signal TAG2 is contained in the decrypted result, in step S14, the management function section 32 controls the billing function section 33 so as to set a billing for the client and in step S15, further controls the communication function section 31 so as to send back the signal TAG2 contained in the decrypted result to the client terminal 3.

In response to this, in step S8, the communication function section 41 of the client terminal 3 receives the response from the content sales server 1 and outputs it to the management function section 42. The management function section 42 confirms whether the random number NON2 contained in this response is the same as that stored in the storage function section 45. When it can be confirmed that they are the same, it is determined that the processing up to this point has been completed normally, and this mutual operation is terminated. Conversely, when it cannot be confirmed that they are the same, since there is a possibility that some kind of illegal operation has been performed, the digital content is made unusable by a malicious client by making ineffective the digital content which is made effective in step S5.

As has thus been described, according to the first mutual operation, since the number of repetitions REP for which the processes of steps S3 and S4 are repeated is determined by a random number, the timing at which the process of step S5 is performed, that is, the timing at which the content is made effective, can be prevented from being known by a malicious client.

Furthermore, since the communication from the client terminal 3 to the content sales server 1 is performed with the random numbers NON1 and NON2 being encrypted in a linked manner, the data sequence can be prevented from being replaced with a fake by a malicious client.

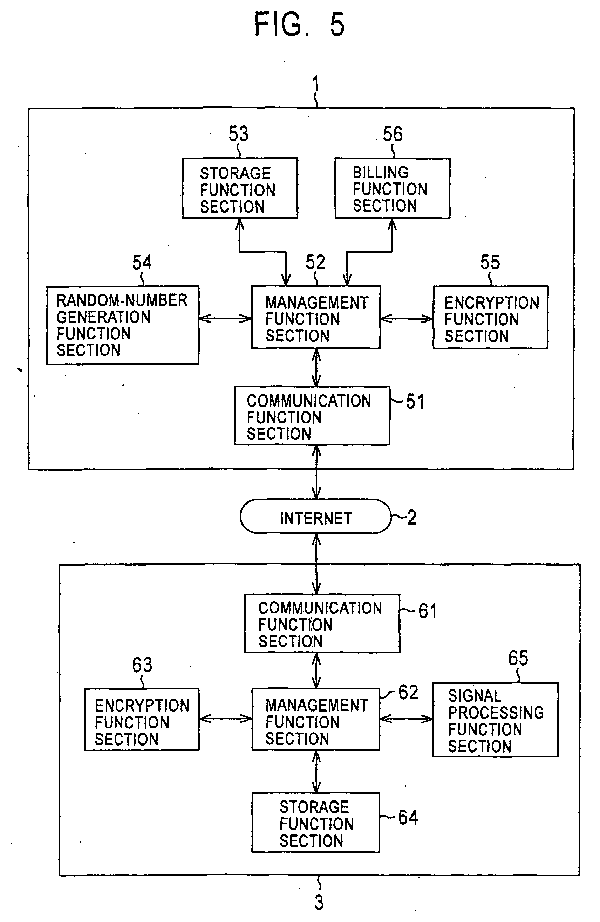

Fig. 5 shows a second example of the configuration of the functional blocks which form each of the content sales server 1 and the client terminal 3.

A communication function section 51 of the content sales server 1 communicates various kinds of data with the client terminal 3 via the Internet 2 under the control of a management function section 52. The management function section 52 performs processes corresponding to various kinds of data, which is input via the communication function section 51, from the client terminal 3. A storage function section 53 stores various kinds of data under the control of the management function section 52. A random-number generation function section 54 generates a random number under the control of the management function section 52. An encryption function section 55 encrypts and decrypts various kinds of data by using a secret key shared with the client terminal 3 under the control of the management function section 52. A billing function section 56 performs a billing process for the client under the control of the management function section 52.

A communication function section 61 of the client terminal 3 communicates various kinds of data with the content sales server 1 via the Internet 2 under the control of a management function section 62. The management function section 62 performs processes corresponding to various kinds of data, input via the communication function section 61, from the content sales server 1. An encryption function section 63 encrypts and decrypts various kinds of data by using a secret key shared with the content sales server 1 under the control of the management function section 62. A storage function section 64 stores various kinds of data under the control of the management function section 62. A signal processing function section 65 performs a predetermined process under the control of the management function section 62.

The sections from the management function section 52 to the billing function section 56 which form the content sales server 1, and the sections from the management function section 62 to the storage function section 64 which form the client terminal 3 are designed so as not to output information (for example, an encryption key, a generated random number, a stored value, etc.) held by themselves in response to any operation from a malicious client or the like.

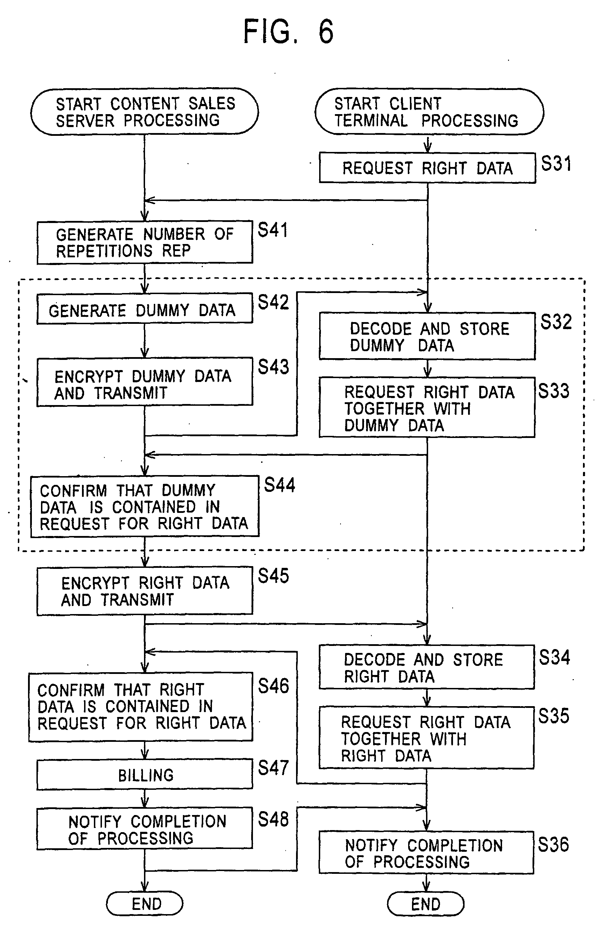

A description will now be given, with reference to the flowchart in Fig. 6, of a mutual operation by the second example of the configuration of the content sales server 1 and the client terminal 3 (hereinafter referred to as a "second mutual operation").

The assumption in which this second mutual operation is performed is that digital content to which right data is not added (digital content which is not in a usable state), which is downloaded from the content sales server 1 via the Internet 2, has already been stored in the storage function section 64 of the client terminal 3. Furthermore, it is assumed that the encryption function section 55 of the content sales server 1 and the encryption function section 63 of the client terminal 3 have a common secret key used for an encryption process and a decryption process. However, instead of having a common secret key, both of them may be assigned with a public key, and AKE may be performed to share a secret key. Furthermore, it is assumed that information regarding the billing for the client (for example, the credit card number, etc.) has already been supplied to the billing function section 56 of the content sales server 1.

In step S31, the management function section 62 of the client terminal 3 causes the signal processing function section 65 to generate a request for right data corresponding to the digital content which has already been obtained, causes the encryption function section 63 to encrypt the request for right data, and thereafter, controls the communication function section 61 so as to transmit it to the content sales server 1.

In the content sales server 1 which has received and has decrypted the request for right data, in step S41, in order to determine the number of repetitions REP, the management function section 52 causes the random-number generation function section 54 to generate a random number which is a positive integer. In step S42, the management function section 52 causes the random-number generation function section 54 to generate a random number as dummy for the right data (hereinafter referred to as "dummy data") and causes the storage function section 45 to store it. In step S43, the management function section 52 causes the encryption function section 55 to encrypt the dummy data and causes the communication function section 51 to transmit the encrypted dummy data to the client terminal 3.

In the client terminal 3 which has received and has decrypted the encrypted dummy data, in step S32, the management function section 62 causes the encryption function section 62 to decrypt the encrypted dummy data and causes the storage function section 64 to store it. At this stage, at the client terminal 3, it cannot be determined whether the obtained data is dummy data or true right data. In step S33, the management function section 33 causes the signal processing function section 65 to generate a request for right data again, causes the encryption function section 63 to encrypt the request for right data together with the decrypted result (in this case, the dummy data), and controls the communication function section 61 so as to transmit it to the content sales server 1.

In the content sales server 1 which has received and has decrypted the request for right data, in step S44, the management function section 52 confirms whether the data received together with the request for the right data is the same as the dummy data stored in the storage function section 53. Only when it can be confirmed that they are the same, the management function section 52 continues with the subsequent processes. Conversely, when it cannot be confirmed that they are the same, the management function section 52 stops the subsequent processes because there is a possibility that some kind of illegal operation has been performed by a malicious client or the like.

The management function section 52 repeats the processes of the above-described steps S42 to S44 (the processes surrounded by the broken line in the figure) for a number of repetitions REP. Thereafter, in step S45, the management function section 52 reads the true right data stored in the storage function section 53, causes the encryption function section 55 to encrypt the true right data, and causes the communication function section 51 to transmit the encrypted right data to the client terminal 3.

In the client terminal 3 which has received and has decrypted the encrypted right data, in step S34, the management function section 62 causes the encryption function section 62 to decrypt the encrypted right data and causes the storage function section 64 to store it. At this stage, in the storage function section 64, since the digital content and the right data corresponding to it are ready, this digital content becomes usable. However, even at this stage, since it is not possible for the client terminal 3 to determine whether the transmitted data is dummy data or the true right data, the client terminal 3 does not know that the digital content has become usable. In step S35, the management function section 62 controls the communication function section 61 so as to transmit a request for right data together with the decrypted result (in this case, the right data) again to the content sales server 1.

In the content sales server 1 which has received and has decrypted the request for right data, in step S46, the management function section 52 confirms whether the data which is received together with the request for right data is the same as the right data stored in the storage function section 53. Only when it can be determined that they are the same, the management function section 52 continues with the subsequent processes. Conversely, when it cannot be confirmed that they are the same, the management function section 52 stops the subsequent processes because there is a possibility that some kind of malicious operation has been performed by a malicious client or the like.

In step S47, the management function section 52 controls the billing function section 56 so as to set a billing for the client. In step S48, the management function section 52 controls the communication function section 61 so as to notify the client terminal 3 that a series of processes on the content sales server 1 side has been completed.

In response to this notification, in step S36, the management function section 62 of the client terminal 3 confirms the completion of the series of the processes on the content sales server 1 side, and the processing on the client terminal 3 side is also terminated.

As has thus been described, according to the second mutual operation, since the number of repetitions REP for which the processes of steps S42 to S44 are repeated is determined by a random number, the timing at which the process of step S45 is performed, that is, the timing at which the true right data is transmitted, can be prevented from being known by a malicious client.

Furthermore, since the communication between the client terminal 3 and the content sales server 1 is encrypted, on the Internet 2, the data sequence can be prevented from being replaced with a fake by a malicious client.

Therefore, according to the first and second mutual operations of the digital content sales system of the present invention, it is possible to prevent an occurrence of a situation in which, although usable digital content is obtained on the client terminal 3 side, billing is not performed on the corresponding client, such a situation being caused by an intentional operation by a malicious client.

In this specification, the steps describing a program recorded on a recording medium include not only processing which is carried out chronologically in the written order but also processing which is executed concurrently or individually although it is not necessarily processed chronologically.

Furthermore, in this specification, the "system" represents the entire device formed of a plurality of devices.

### Industrial Applicability

As has thus been described, according to the present invention, it becomes possible to prevent the timing at which digital content data is made usable and the timing at which a billing process is performed from being known by a malicious client.

## Claims

1. A data communication system in which a server and a client terminal are connected to each other via a network,
wherein, after said client terminal repeats a process for transmitting a first signal and a first random number, which are encrypted, to said server via said network for a random number of times, said client terminal sets stored content data from an ineffective state to an effective state, and'transmits a second signal and a second random number, which are encrypted, to said server via said network, and
wherein said server decrypts a data sequence from said client terminal via said network, sends back said first random number to said client terminal via said network when said first signal is contained in the decrypted result, and performs a billing process for a user of said client terminal when said second signal is contained in the decrypted result, and thereafter, sends back said second random number to said client terminal via the network.

2. An information processing device which is connected to a server concerned with sales of content data via a network, said information processing device comprising:
random-number generation means for generating a random number;
generation means for generating first and second signals;
encryption means for encrypting a data sequence;
transmission means for transmitting said data sequence encrypted by said encryption means to said server via said network;
setting means for setting stored content data from an ineffective state to an effective state; and
control means for controlling said random-number generation means, said generation means, said encryption means, said transmission means, and said setting means,
wherein, after said control means repeats a process for transmitting said the first signal and said first random number, which are encrypted, to said server via said network for a random number of times, said control means sets said content data from the ineffective state to the effective state, and transmits said second signal and said second random number, which are encrypted, to said server via said network.

3. An information processing method for use with an information processing device which is connected via a network to a server concerned with sales of content data, said information processing method comprising:
a random-number generation step of generating a random number;
a generation step of generating first and second signals;
an encryption step of encrypting a data sequence;
a transmission step of transmitting said data sequence encrypted in the process of said encryption step to said server via said network;
a setting step of setting stored content data from an ineffective state to an effective state; and
a control step of controlling said random-number generation step, said generation step, said encryption step, said transmission step, and said setting step,
wherein, in said control step, after a process for transmitting said the first signal and said first random number, which are encrypted, to said server via said network is repeated a random number of times, said content data is set from the ineffective state to the effective state, and said second signal and said second random number, which are encrypted, are transmitted to said server via said network.

4. A recording medium having recorded thereon a computer-readable program used to control a client terminal which is connected via a network to a server concerned with sales of content data, said program comprising:
a random-number generation step of generating a random number;
a generation step of generating first and second signals;
an encryption step of encrypting a data sequence;
a transmission step of transmitting said data sequence encrypted in the process of said encryption step to said server via said network;
a setting step of setting stored content data from an ineffective state to an effective state; and
a control step of controlling said random-number generation step, said generation step, said encryption step, said transmission step, and said setting step,
wherein, in said control step, after a process for transmitting said the first signal and said first random number, which are encrypted, to said server via said network is repeated a random number of times, said content data is set from the ineffective state to the effective state, and said second signal and said second random number, which are encrypted, are transmitted to said server via said network.

5. A program for allowing a computer to execute, which computer is connected via a network to a server concerned with sales of content data:
a random-number generation step of generating a random number;
a generation step of generating first and second signals;
an encryption step of encrypting a data sequence;
a transmission step of transmitting said data sequence encrypted in the process of said encryption step to said server via said network;
a setting step of setting stored content data from an ineffective state to an effective state; and
a control step of controlling said random-number generation step, said generation step, said encryption step, said transmission step, and said setting step,
wherein, in said control step, after a process for transmitting said the first signal and said first random number, which are encrypted, to said server via said network is repeated a random number of times, said content data is set from the ineffective state to the effective state, and said second signal and said second random number, which are encrypted, are transmitted to said server via said network.

6. An information processing device for communicating information related to content data with a client terminal connected via a network, said information processing device comprising:
decryption means for decrypting a data sequence received from said client terminal via said network;
sending-back means for sending back, to said client terminal via said network, a data sequence contained in the decrypted result of said decryption means; and
billing means for performing a billing process for a user of said client terminal in such a manner as to correspond to the decrypted result of said decryption means.

7. An information processing method for use with an information processing device for communicating information related to content data with a client terminal connected via a network, said information processing method comprising:
a decryption step of decrypting a data sequence received from said client terminal via said network;
a sending-back step of sending back, to said client terminal via said network, a data sequence contained in the decrypted result in the process of said decryption step; and
a billing step of performing a billing process for a user of said client terminal in such a manner as to correspond to the decrypted result in the process of said decryption step.

8. A recording medium having recorded thereon a computer-readable program for controlling a server which communicates information related to content data with a client terminal connected via a network, said program comprising:
a decryption step of decrypting a data sequence received from said client terminal via said network;
a sending-back step of sending back, to said client terminal via said network, a data sequence contained in the decrypted result in the process of said decryption step; and
a billing step of performing a billing process for a user of said client terminal in such a manner as to correspond to the decrypted result in the process of said decryption step.

9. A program for allowing a computer to execute, which computer communicates information related to content data with a client terminal connected via a network:
a decryption step of decrypting a data sequence received from said client terminal via said network;
a sending-back step of sending back, to said client terminal via said network, a data sequence contained in the decrypted result in the process of said decryption step; and
a billing step of performing a billing process for a user of said client terminal in such a manner as to correspond to the decrypted result in the process of said decryption step.

10. A data communication system in which a server and a client terminal are connected to each other via a network,
wherein said client terminal decrypts and stores a data sequence from said server via said network, encrypts the decrypted result together with a request for transmitting right data corresponding to stored content data, and transmits it to said server via said network, and
wherein, after said server repeats a process for transmitting dummy data, which is encrypted, to said client terminal via said network in such a manner as to correspond to said transmission request from said client terminal via said network and for confirming that said dummy data is contained in the response from said client terminal for a random number of times, said server transmits said right data, which is encrypted, corresponding to content data stored in said client terminal to said client terminal via said network, and performs a billing process for a user of said client terminal after confirming that said right data is contained in the response from said client terminal.

11. An information processing device which is connected to a server concerned with sales of content data via a network, said information processing device comprising:
storage means for storing content data;
generation means for generating a request for transmitting right data corresponding to said content data;
decryption means for decrypting and storing a data sequence from said server via said network; and
transmission means for transmitting the decrypted result of said decryption means to said server via said network, said decoded result being encrypted in such a manner as to be contained in said transmission request.

12. An information processing method for use with an information processing device which is connected to a server concerned with sales of content data via a network, said information processing method comprising:
a storage step of storing content data;
a generation step of generating a request for transmitting right data corresponding to said content data;
a decryption step of decrypting and storing a data sequence from said server via said network; and
a transmission step of transmitting the decrypted result in the process of said decryption step to said server via said network, said decoded result being encrypted in such a manner as to be contained in said transmission request.

13. A recording medium having recorded thereon a computer-readable program for controlling a client terminal which is connected via a network to a server concerned with sales of content data, said program comprising:
a storage step of storing content data;
a generation step of generating a request for transmitting right data corresponding to said content data;
a decryption step of decrypting and storing a data sequence from said server via said network; and
a transmission step of transmitting the decrypted result in the process of said decryption step to said server via said network, said decoded result being encrypted in such a manner as to be contained in said transmission request.

14. A program for allowing a computer to execute, which computer is connected via a network to a server concerned with sales of content data:
a storage step of storing content data;
a generation step of generating a request for transmitting right data corresponding to said content data;
a decryption step of decrypting and storing a data sequence from said server via said network; and
a transmission step of transmitting the decrypted result in the process of said decryption step to said server via said network, said decoded result being encrypted in such a manner as to be contained in said transmission request.

15. An information processing device for transmitting, via a network, right data corresponding to content data to a client terminal storing the content data, said information processing device comprising:
random-number generation means for generating a random number;
encryption means for encrypting a data sequence;
transmission means for transmitting said data sequence encrypted by said encryption means to said client terminal via said network;
decryption means for decrypting a data sequence received from said client terminal via said network;
billing means for performing a billing process for a user of said client terminal in such a manner as to correspond to the decrypted result of said decryption means; and
control means for controlling said random-number generation means, said generation means, said encryption means, said transmission means, said decryption means, and said billing means,
wherein said control means repeats a process for transmitting dummy data, which is encrypted, formed of a random number to said server via said network and for confirming that said dummy data is contained in the response from said client terminal for a random number of times, said right data, which is encrypted, is transmitted to said client terminal via said network, and after confirming that said right data is contained in the response from said client terminal, a billing process for a user of said client terminal is performed.

16. An information processing method for use with an information processing device for transmitting right data corresponding to content data to a client terminal storing the content data via a network, said information processing method comprising:
a random-number generation step of generating a random number;
an encryption step of encrypting a data sequence;
a transmission step of transmitting said data sequence encrypted in the process of said encryption step to said client terminal via said network;
a decryption step of decrypting a data sequence received from said client terminal via said network;
a billing step of performing a billing process for a user of said client terminal in such a manner as to correspond to the decrypted result in the process of said decryption step; and
a control step of controlling said random-number generation step, said encryption step, said transmission step, said decryption step, and said billing step,
wherein, in said control step, after a process for transmitting dummy data, which is encrypted, formed of a random number to said client terminal via said network and for confirming that said dummy data is contained in the response from said client terminal is repeated a random number of times, said right data, which is encrypted, is transmitted to said client terminal via said network, and after confirming that said dummy data is contained in the response from said client terminal, a billing process for a user of said client terminal is performed.

17. A recording medium having recorded thereon a computer-readable program for controlling a server which transmits right data corresponding to content data to a client terminal storing said content data via a network, said program comprising:
a random-number generation step of generating a random number; an encryption step of encrypting a data sequence;
a transmission step of transmitting said data sequence encrypted in the process of said encryption step to said client terminal via said network;
a decryption step of decrypting a data sequence received from said client terminal via said network;
a billing step of performing a billing process for a user of said client terminal in such a manner as to correspond to the decrypted result in the process of said decryption step; and
a control step of controlling said random-number generation step, said encryption step, said transmission step, said decryption step, and said billing step,
wherein, in said control step, a process for transmitting dummy data, which is encrypted, formed of a random number to said server via said network and for confirming that said dummy data is contained in the response from said client terminal is repeated a random number of times, said right data, which is encrypted, is transmitted to said client terminal via said network, and after confirming that said right data is contained in the response from said client terminal, a billing process for a user of said client terminal is performed.

18. A program for allowing a computer to execute, which computer transmits right data corresponding to content data to a client terminal storing said content data via a network:
a random-number generation step of generating a random number; an encryption step of encrypting a data sequence;
a transmission step of transmitting said data sequence encrypted in the process of said encryption step to said client terminal via said network;
a decryption step of decrypting a data sequence received from said client terminal via said network;
a billing step of performing a billing process for a user of said client terminal in such a manner as to correspond to the decrypted result in the process of said decryption step; and
a control step of controlling said random-number generation step, said encryption step, said transmission step, said decryption step, and said billing step,
wherein, in said control step, after a process for transmitting dummy data, which is encrypted, formed of a random number to said server via said network and for confirming that said dummy data is contained in the response from said client terminal is repeated a random number of times, said right data, which is encrypted, is transmitted to said client terminal via said network, and after confirming that said dummy data is contained in the response from said client terminal, a billing process for a user of said client terminal is performed.
